# EUROPEAN PATENT APPLICATION

(11) **EP 4 571 438 A1**
(43) Date of publication of application: **18.06.2025**
(21) Application number: 24210555.9
(22) Date of filing: 04.11.2024
(51) Int. Cl.: G05B 19/042

(54) **FIELD DEVICE AND DIAGNOSTIC METHOD**

(30) Priority: 07.11.2023 JP 2023189961
(71) Applicant: Yokogawa Electric Corporation, Tokyo 180-8750 (JP)
(72) Inventor: TAKAHASHI, Hiroyuki, Musashino-shi, Tokyo, 180-8750, (JP)
(74) Representative: Winter, Brandl - Partnerschaft mbB

(57) **Abstract**

In a field device (20) capable of performing field communication, a diagnostic script received using the field communication is stored in a storage unit (211), the diagnostic script describing a sequence of a diagnostic process to be executed at the field device (20), and a processor (212) makes a diagnosis on the field device (20) by executing the diagnostic script stored in the storage unit (211). For example, by executing the diagnostic script, the processor (212) acquires information on an alarm that has occurred at the field device (20), updates firmware of the field device (20), acquires an internal variable of the field device (20), or performs zero point adjustment of the field device (20).

## Description

### FIELD

The present disclosure relates to a field device and a diagnostic method.

### BACKGROUND

When a diagnosis is made on a field device, such as a pressure transmitter or a flowmeter, a user provides an instruction to the field device to be diagnosed, the instruction being for reading a parameter set at the field device from the field device. Subsequently, according to the instruction from the user, the field device transmits the parameter set at the field device, to the user. This process is repeatedly executed for each parameter that is desired to be read from the field device to be diagnosed.

Example of related-art is described in Japanese Laid-open Patent Publication No. 2004-126688.

However, in a case where there are plural field devices to be diagnosed, for example, the user needs to make diagnoses on each of the plural field devices and this work is thus burdensome. Furthermore, when, in conjunction with a diagnosis on the field device, a parameter of the field device is to be changed for a change in operation of the field device or for enabling or disabling its function, the user changes the parameter manually, and this work is thus even more burdensome and prone to human errors.

What is thus proposed through the present disclosure is a technique enabling improvement in efficiency of diagnoses on field devices.

### SUMMARY

According to an aspect of an embodiment, a field device is capable of performing field communication, the field device includes a storage unit and a processor. The storage unit stores a diagnostic script that is a script received using the field communication, the script describing a sequence of a diagnostic process to be executed at the field device. The processor makes a diagnosis on the field device by executing the diagnostic script stored in the storage unit.

### BRIEF DESCRIPTION OF THE DRAWINGS

FIG. 1 is a diagram illustrating an example of a configuration of a diagnostic system according to a first embodiment of the present disclosure;
FIG. 2 is a diagram illustrating an example of a configuration of a field device according to the first embodiment of the present disclosure;
FIG. 3 is a diagram illustrating an example of a processing sequence in the diagnostic system according to the first embodiment of the present disclosure;
FIG. 4 is a diagram illustrating an example of a diagnostic script according to the first embodiment of the present disclosure;
FIG. 5 is a diagram illustrating an example of a diagnostic script according to the first embodiment of the present disclosure;
FIG. 6 is a diagram illustrating an example of a diagnostic script according to the first embodiment of the present disclosure; and
FIG. 7 is a diagram illustrating an example of a configuration of a diagnostic system according to a second embodiment of the present disclosure.

### DESCRIPTION OF EMBODIMENTS

Embodiments of the present disclosure will hereinafter be described on the basis of the drawings.

With respect to the following embodiments, redundant description may be omitted by assignment of the same reference sign to parts that are the same or processes that are the same.

### First Embodiment

### <Configuration of Diagnostic System>

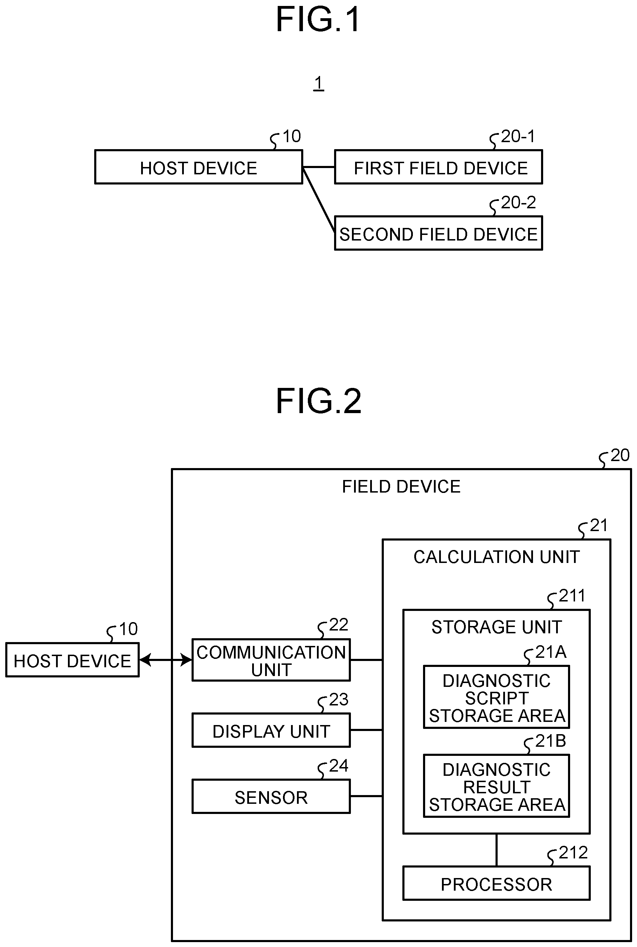

FIG. 1 is a diagram illustrating an example of a configuration of a diagnostic system according to a first embodiment of the present disclosure. In FIG. 1, a diagnostic system 1 has a host device 10, a first field device 20-1, and a second field device 20-2. The host device 10 and the first field device 20-1 are capable of performing field communication with each other, and the host device 10 and the second field device 20-2 are capable of performing field communication with each other. The first field device 20-1 and the second field device 20-2 may hereinafter be collectively referred to as "field devices 20". Examples of the field devices 20 include a pressure transmitter, a temperature transmitter, a multivariable transmitter, and a flowmeter.

### <Configuration of Field Device>

FIG. 2 is a diagram illustrating an example of a configuration of a field device according to the first embodiment of the present disclosure. In FIG. 2, the field device 20 has a calculation unit 21, a communication unit 22, a display unit 23, and a sensor 24. The calculation unit 21 has a storage unit 211 and a processor 212. The storage unit 211 has a diagnostic script storage area 21A and a diagnostic result storage area 21B.

Examples of the calculation unit 21 include a micro-controller unit (MCU). Examples of the storage unit 211 include a memory. Examples of the processor 212 include a central processing unit (CPU). Examples of the display unit 23 include a liquid crystal display (LCD).

The communication unit 22 performs field communication with the host device 10. Examples of the field communication performed between the communication unit 22 and the host device 10 include HART communication and Modbus communication.

The sensor 24 detects a predetermined physical quantity and outputs data (which may hereinafter be referred to as "sensor data") representing the physical quantity detected, to the calculation unit 21.

The processor 212 calculates a process value on the basis of the sensor data. Furthermore, the processor 212 performs various kinds of calculation on the basis of data input from the host device 10 via the communication unit 22.

The process value calculated by the processor 212 is displayed on the display unit 23. Furthermore, parameters set at the field device 20 are displayed on the display unit 23.

### <Processing Sequence in Diagnostic System>

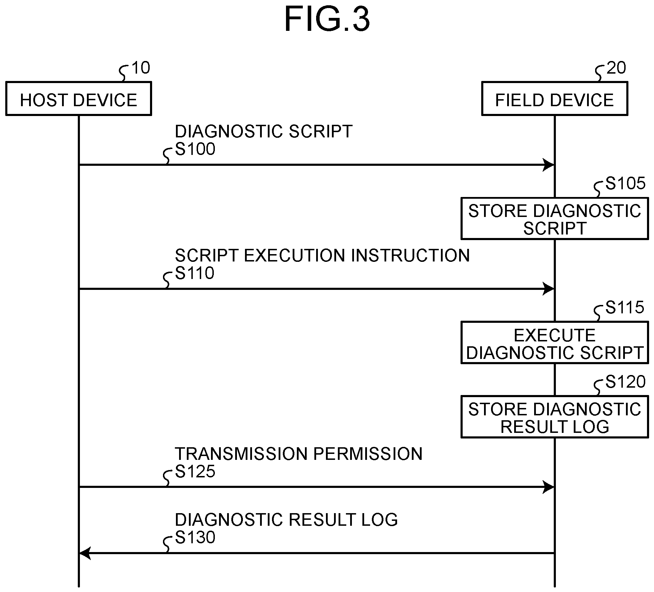

FIG. 3 is a diagram illustrating an example of a processing sequence in the diagnostic system according to the first embodiment of the present disclosure.

At Step S100 in FIG. 3, the host device 10 transmits, according to an instruction from a user, a diagnostic script that has been registered in the host device 10, to the field device 20. Through the processing at Step S100, the diagnostic script is downloaded from the host device 10 to the field device 20. Before execution of Step S 100, the user generates the diagnostic scrip and registers the diagnostic script generated, in the host device 10 beforehand, the diagnostic script describing a sequence of a diagnostic process to be executed at the field device 20. The diagnostic script describes only the sequence of the diagnostic process and thus has a small data size. Therefore, a load put on field communication by download of the diagnostic scrip is small and the download of the diagnostic scrip does not affect operation of the field device 20.

Subsequently, at Step S105, the processor 212 stores the diagnostic script received by the communication unit 22 into the diagnostic script storage area 21A.

Subsequently, at Step S110, the host device 10 transmits, according to an instruction from the user, a script execution instruction to the field device 20. When causing the diagnostic scrip to be executed at the field device 20, for example, the user provides the script execution instruction to the field device 20 via the host device 10, by changing operation modes of the host device 10 and the field device 20. The user preferably provides the script execution instruction to the host device 10, for example, during maintenance, such as periodic repairs, of the field device 20, rather than during operation of the field device 20, to avoid affecting the operation of the field device 20.

Subsequently, at Step S115, the processor 212 executes, according to the script execution instruction received by the communication unit 22 at Step S 110, the diagnostic script that has been stored in the diagnostic script storage area 21A. In a case where this diagnostic script is executed during maintenance of the field device 20, field communication between the host device 10 and the field device 20 is expected to be interrupted during execution of the diagnostic script. However, because the download of the diagnostic script to be executed at Step S115 has already been completed at Step S105, the diagnostic script is able to be executed offline. Therefore, interruption of the field communication during the execution of the diagnostic script does not affect the execution of the diagnostic script.

Subsequently, at Step S120, the processor 212 stores a result (which may hereinafter be referred to as "diagnostic result") of the execution of the diagnostic script and data (which may hereinafter be referred to as "acquired data") acquired through the execution of the diagnostic script, into the diagnostic result storage area 21B. The diagnostic result and the acquired data may hereinafter be collectively referred to as "diagnostic result log". After storing the diagnostic result log into the diagnostic result storage area 21B, the processor 212 is put on standby.

Subsequently, at Step S125, the host device 10 transmits, according to an instruction from the user, permission for transmission of the diagnostic result log to the field device 20.

Subsequently, at Step S130, according to the permission for the transmission received by the communication unit 22 at Step S125, the processor 212 reads the diagnostic result log that has been stored in the diagnostic result storage area 21B and transmits the diagnostic result log read to the host device 10 via the communication unit 22.

Analysis of the diagnostic result log by the host device 10 that has received the diagnostic result log at Step S 130 enables the user to identify a cause of a failure at the field device 20, for example.

### <Examples of Diagnostic Script>

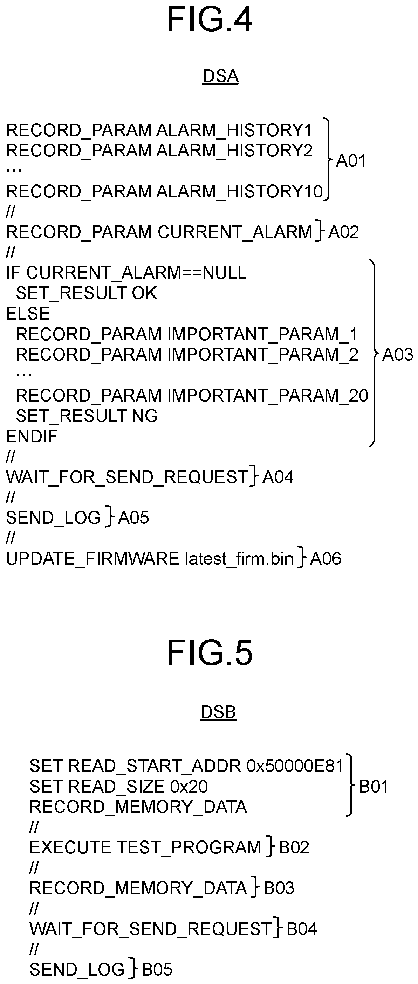

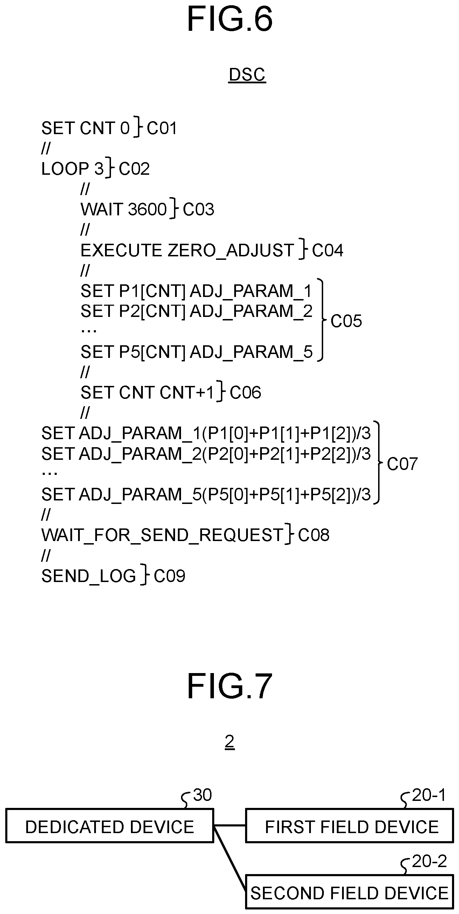

FIG. 4, FIG. 5, and FIG. 6 are diagrams illustrating examples of the diagnostic script according to the first embodiment of the present disclosure. FIG. 4 illustrates a diagnostic script DSA executed when alarm information generated at the field device 20 is to be acquired. FIG. 5 illustrates a diagnostic script DSB executed when an internal variable of the field device 20 is to be acquired. FIG. 6 illustrates a diagnostic script DSC executed when zero point adjustment of the field device 20 is to be performed. A data format of the diagnostic script executed at the field device 20 is not limited. For example, the diagnostic script may be described by a list of original commands defined originally or may be described by an existing description method, such as JSON or XML. Such "original commands defined originally" may sometimes be referred to as "unique commands". In the examples described hereinafter, the diagnostic scripts DSA, DSB, and DSC are described by lists of original commands.

### <Diagnostic Script DSA (FIG. 4)>

In FIG. 4, the diagnostic script DSA is formed of six blocks, blocks A01 to A06.

At the block A01, the processor 212 records all of 10 pieces of alarm history information held in the field device 20 into the diagnostic result log.

Subsequently, at the block A02, the processor 212 records alarm information on any alarm currently occurring, into the diagnostic result log.

Subsequently, at the block A03, the processor 212 checks the alarm information recorded at the block A02 and in a case where no alarm is currently occurring, the processor 212 determines a diagnostic result to be okay. On the contrary, in a case where any alarm is currently occurring, the processor 212 determines a diagnostic result to be not okay and records all of parameters (IMPORTANT_PARAM in the example of FIG. 4) related to occurrence of the alarm into the diagnostic result log.

Through the processing at the blocks A01 to A03, recording of the parameters in the diagnostic result log is completed.

Subsequently, at the block A04, the processor 212 stands by until permission for transmission of the diagnostic result log is provided from the host device 10, and the processing proceeds to the block A05 when the permission for the transmission is received via the communication unit 22.

Subsequently, at the block A05, the processor 212 transmits the diagnostic result log to the host device 10 via the communication unit 22.

Subsequently, at the block A06, the processor 212 updates firmware of the field device 20 by writing a bin file (latest_firm. bin) that has been downloaded to the field device 20 beforehand, into the field device 20.

### <Diagnostic Script DSB (FIG. 5)>

In FIG. 5, the diagnostic script DSB is formed of five blocks, blocks B01 to B05. The diagnostic script DSB executed when an internal variable of the field device 20 is to be acquired is executed for, for example, determination of a cause upon occurrence of trouble, such as a function of the field device 20 not operating in accordance with its specifications. Examples of the internal variable of the field device 20 include data that correspond to a temp variable stored in the storage unit 211 and that are unable to be directly accessed from outside of the field device 20. By execution of the diagnostic script DSB illustrated in FIG. 5, internal variables before and after execution of a function (TEST_PROGRAM) of the field device 20 are recorded. A time period taken for analysis of a cause of trouble that has occurred at the field device 20 may thereby be able to be reduced greatly.

At the block B01, the processor 212 reads internal variable data on the basis of a memory address and a memory size, at which the internal variable of the field device 20 has been stored, and records the internal variable data read, into the diagnosis result log.

Subsequently, at the block B02, the processor 212 executes the function (TEST_PROGRAM) of the field device 20.

Subsequently, at the block B03, the processor 212 reads internal variable data after execution of the function (TEST_PROGRAM) of the field device 20 again and records the internal variable data read, into the diagnostic result log.

Subsequently, at the block B04, the processor 212 stands by until permission for transmission of the diagnostic result log is provided from the host device 10, and the processing proceeds to the block B05 when the permission for the transmission is received via the communication unit 22.

At the block B05, the processor 212 then transmits the diagnostic result log to the host device 10 via the communication unit 22.

### <Diagnostic Script DSC (FIG. 6)>

In FIG. 6, the diagnostic script DSC is formed of nine blocks, blocks C01 to C09. For example, in a case where the field device 20 is a flowmeter, zero point adjustment of the flowmeter is usually implemented at a time of installation of the flowmeter or at a time of maintenance of the flowmeter.

At the block C01, the processor 212 sets CNT to an initial value.

Subsequently, at the block C02, the processor 212 repeatedly executes processing from the block C03 to the block C06 three times.

At the block C03, the processor 212 stands by for 3600 seconds to let the flowmeter itself and fluid inside the flowmeter stabilize.

Subsequently, at the block C04, the processor 212 performs zero point adjustment.

Subsequently, at the block C05, the processor 212 stores adjustment values calculated in the zero point adjustment (which may hereinafter be referred to as "zero point adjustment values"), ADJ_PARAM_1 to ADJ_PARAM_5, into buffers P1 to P5.

Subsequently, at the block C06, the processor 212 increments CNT that is an array index. After the block C06, the processing returns to the block C03.

After the processing at the blocks C03 to C06 has been repeatedly executed three times, at the block C07, the processor 212 calculates, for each of the buffers P1 to P5, a mean value (which may hereinafter be referred to as "adjustment value mean value") of three zero point adjustment values stored in each of the buffers P1 to P5 and sets ADJ_PARAM_1 to ADJ_PARAM_5 to final zero point adjustment values that are the adjustment value mean values calculated.

During the processing of the blocks C01 to C07, the processor 212 sets all of the values acquired in the processing of the blocks C01 to C07 in the diagnostic result log.

Subsequently, at the block C08, the processor 212 stands by until permission for transmission of the diagnostic result log is provided from the host device 10, and the processing proceeds to the block C09 when the permission for the transmission is received via the communication unit 22.

At the block C09, the processor 212 then transmits the diagnostic result log to the host device 10 via the communication unit 22.

The first embodiment has been described above.

### Second Embodiment

### <Configuration of Diagnostic System>

FIG. 7 is a diagram illustrating an example of a configuration of a diagnostic system according to a second embodiment of the present disclosure. In FIG. 7, a diagnostic system 2 has a dedicated device 30, a first field device 20-1, and a second field device 20-2. The dedicated device 30 and the first field device 20-1 are capable of performing field communication with each other, and the dedicated device 30 and the second field device 20-2 are capable of performing field communication with each other.

In the first embodiment, a diagnosis on the field device 20 is made according to an instruction from a user to the host device 10. However, in this second embodiment, various kinds of work performed by a user in the first embodiment are executed by the dedicated device 30 instead of a user.

A user is thereby able to make a diagnosis on the field device 20 by just connecting the dedicated device 30 that has been set beforehand to perform the various kinds of work, to a system of the field communication, and work of the user is thus reduced and errors in the work of the user are also able to be reduced in the diagnosis on the field device 20. Furthermore, a diagnosis on the field device 20 is not made via the host device 10 and a smaller load is thus put on the host device 10. Furthermore, the diagnostic result log acquired from the field device 20 is integrated at the host device 10 in the first embodiment, but in this second embodiment, a diagnostic result log acquired from the field device 20 is integrated at the dedicated device 30 and a storage capacity of the host device 10 is thus not put under pressure. Furthermore, because the diagnostic result log is integrated at the dedicated device 30, data management is facilitated.

The second embodiment has been described above.

### Third Embodiment

Parameters in a diagnostic script and used in a diagnosis may be parameters calculated by analysis using, for example, artificial intelligence (AI). For example, calculating parameters that are likely to be related to soundness of a plant where a field device 20 is used, from data acquired periodically, and making a diagnosis on the field device 20 on the basis of the parameters calculated have a possibility of enabling precise understanding of any sign of malfunctioning of the field device 20.

For example, all of parameters are acquired beforehand from the field device 20 that has been operated for a long period of time (for example, 5 years or longer) and machine training is performed using training data that are soundness data on the field device 20 and other data related to the soundness of the field device 20. A trained model where an estimated value of soundness of the field device 20 is output is generated by use of all of the parameters in this machine training. However, in preprocessing of the machine training, data unrelated to the soundness (for example, a device name and parameters for testing) may be excluded. Examples of the soundness data include: a time period of uninterrupted operation of the field device 20, the number of errors that occurred at the field device 20, a measured physical quantity of the field device 20 (for example, a fluid type), the largest value and the smallest value of process values measured at the field device 20, and any combination of these pieces of data. For example, dividing the time period of uninterrupted operation by the number of errors enables calculation of a mean error occurrence time period, and it can be said that the larger this mean error occurrence time period, the higher the soundness of the field device 20.

Causing the processor 212 to execute the diagnostic script using the trained model generated as described above results in automatic acquisition of parameters that the field device 20 has and the estimated value of soundness of the field device 20 is calculated on the basis of the parameters acquired. A user is able to consider, for example, replacement of the field device 20 by referring to the estimated value of soundness calculated.

Or the estimated value of soundness of the field device 20 may be calculated by installation of a representative trained model in the field device 20 beforehand and execution of processing needed by means of a diagnostic script, the processing needed including acquisition of parameters and setting of parameters from the outside.

The third embodiment has been described above.

As described above, a field device according to the present disclosure (the field device 20 according to the embodiments) is capable of performing field communication and has a storage unit (the storage unit 211 according to the embodiments) and a processor (the processor 212 according to the embodiments). A diagnostic script received using the field communication is stored in the storage unit. The diagnostic script describes a sequence of a diagnostic process to be executed at the field device. The processor makes a diagnosis on the field device by executing the diagnostic script stored in the storage unit.

For example, by executing a diagnostic script, the processor acquires information on an alarm that has occurred at the field device. Furthermore, for example, by executing a diagnostic script, the processor updates firmware of the field device. Furthermore, for example, by executing a diagnostic script, the processor acquires an internal variable of the field device. Furthermore, for example, by executing a diagnostic script, the processor performs zero point adjustment of the field device.

Storing the diagnostic script describing the sequence of the diagnostic process to be executed at the field device in the field device beforehand thus eliminates need for direct operation of the field device by a user upon a diagnosis on the field device and thus enables reduction of the user's man-hours and reduction of human errors in the diagnosis on the field device. Therefore, making the diagnosis on the field device by the processor executing the diagnostic script enables increase in efficiency of the diagnosis on the field device.

Furthermore, the processor executes the diagnostic script according to an execution instruction for the diagnostic script.

As a result, the diagnostic script is able to be executed at any time by the user.

The present disclosure enables improvement in efficiency of diagnoses on field devices.

The following are some examples of a combination of the techniques according to the present disclosure.
(1) A field device capable of performing field communication, the field device comprising:
   a storage unit that stores a diagnostic script that is a script received using the field communication, the script describing a sequence of a diagnostic process to be executed at the field device; and
   a processor that makes a diagnosis on the field device by executing the diagnostic script stored in the storage unit.
(2) The field device according to (1), wherein the processor executes the diagnostic script according to an execution instruction for the diagnostic script.
(3) The field device according to (1) or (2), wherein the processor acquires information on an alarm that has occurred at the field device by executing the diagnostic script.
(4) The field device according to (1) or (2), wherein the processor updates firmware of the field device by executing the diagnostic script.
(5) The field device according to (1) or (2), wherein the processor acquires an internal variable of the field device by executing the diagnostic script.
(6) The field device according to (1) or (2), wherein the processor performs zero point adjustment of the field device by executing the diagnostic script.
(7) The field device according to (1), wherein the processor executes the diagnostic script using a trained model generated by machine training.
(8) A diagnostic method, which is for a field device capable of performing field communication, and in which a processor that the field device has executes processing including:
   storing a diagnostic script that is a script received using the field communication into a storage unit, the script describing a sequence of a diagnostic process to be executed at the field device; and
   making a diagnosis on the field device by executing the diagnostic script stored in the storage unit.

## Claims

1. A field device (20) capable of performing field communication, the field device (20) comprising:
a storage unit (211) that stores a diagnostic script that is a script received using the field communication, the script describing a sequence of a diagnostic process to be executed at the field device (20); and
a processor (212) that makes a diagnosis on the field device (20) by executing the diagnostic script stored in the storage unit (211).

2. The field device (20) according to claim 1, wherein the processor (212) executes the diagnostic script according to an execution instruction for the diagnostic script.

3. The field device (20) according to claim 1, wherein the processor (212) acquires information on an alarm that has occurred at the field device (20) by executing the diagnostic script.

4. The field device (20) according to claim 1, wherein the processor (212) updates firmware of the field device (20) by executing the diagnostic script.

5. The field device (20) according to claim 1, wherein the processor (212) acquires an internal variable of the field device (20) by executing the diagnostic script.

6. The field device (20) according to claim 1, wherein the processor (212) performs zero point adjustment of the field device (20) by executing the diagnostic script.

7. A diagnostic method, which is for a field device capable of performing field communication, and in which a processor that the field device has executes processing including:
storing a diagnostic script that is a script received using the field communication into a storage unit, the script describing a sequence of a diagnostic process to be executed at the field device; and
making a diagnosis on the field device by executing the diagnostic script stored in the storage unit.
